(19) Europäisches Patentamt
European Patent Office
Office européen des brevets

(11) EP 2 813 994 A1

(12) **EUROPEAN PATENT APPLICATION**

(43) Date of publication:
**17.12.2014 Bulletin 2014/51**

(51) Int Cl.:
***G06Q 30/02*** *(2012.01)*

(21) Application number: **14171999.7**

(22) Date of filing: **11.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **11.06.2013 US 201361833830 P**

(71) Applicant: **Strands, Inc.**
**San Mateo, CA 94404 (US)**

(72) Inventors:
- **Torrens, Marc**
**08018 Barcelona (ES)**
- **Tarradellas, Ivan**
**08018 Barcelona (ES)**
- **Shur, Jim**
**08018 Barcelona (ES)**

(74) Representative: **Brinck, David John Borchardt et al**
**RGC Jenkins & Co.**
**26 Caxton Street**
**London SW1H 0RJ (GB)**

(54) **Machine learning system to optimize targeting campaigns in on-line banking environment**

(57) Computer-implemented methods leverage internal data accumulated by a banking institution including merchant sales data and customer purchasing data, in order to best implement merchant offer campaigns by computing a set of "good campaigns" for a given user in real time, while maximizing the success of all active campaigns. (Fig. 1) Multiple factors (208, 210, 212, 214, 216) may be statistically evaluated and combined (218, 220) to determine the best campaigns for a given user. Other considerations preferably relate directly to a level of accomplishment of the active campaigns and their time remaining. Machine learning may be applied to assess a predicted level of interest of each user for the active campaigns (Fig. 3). In some embodiments, the respective weights of various factors can be changed in order to adapt the algorithm to specific business goals.

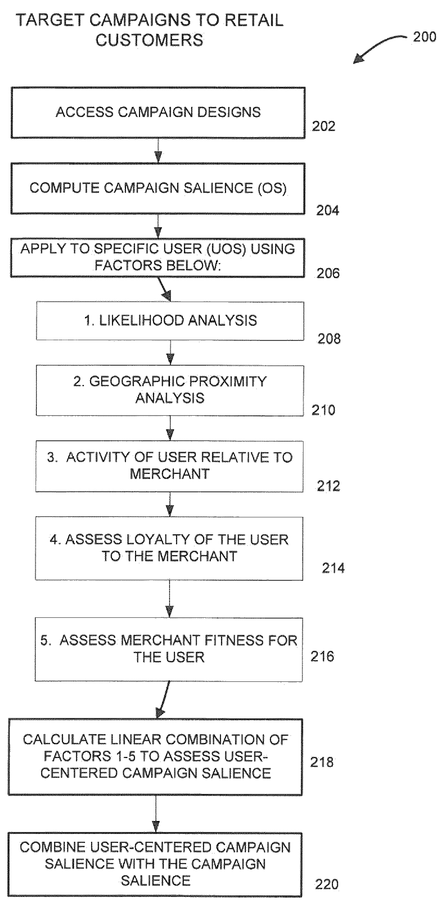


FIG. 2

EP 2 813 994 A1

## Description

Priority

This application claims priority to U.S. Provisional Patent Application No. 61/833,830 filed June 11, 2013 and incorporated herein in its entirety by this reference. This specification includes the attached Appendix.

Technical Field

This invention pertains to computer-implemented methods for optimizing the selection and targeting of appropriate financial transaction offers to existing customers of a financial institution.

Summary of the Invention

The following is a summary of the invention in order to provide a basic understanding of some aspects of the invention. This summary is not intended to identify key/critical elements of the invention or to delineate the scope of the invention. Its sole purpose is to present some concepts of the invention in a simplified form as a prelude to the more detailed description that is presented later.

The present disclosure relates in a business sense to "loyalty programs" for merchants. It may be implemented advantageously for a financial institution such as a bank to better serve its commercial customers, also referred to herein as merchants. In one embodiment, a web platform is provisioned to propose commercial offers to the bank's retail customers (also called "users") on behalf of the merchants, through personalized targeting. Such a platform may be fully integrated with the financial institution's online banking application. One goal for the merchants is to use the platform as a loyalty program to drive their commercial activities. It can also be used to acquire new customers. In one example, a business model may be based on merchant subscriptions to the platform and fees based on offer impressions and redemptions.

On the technical side, methods and algorithms we describe are intended to be implemented in software; i.e. in one of more computer programs, routines, functions or the like. Thus it may best be utilized on a machine such as a computer or server that has at least one processor and access to memory, as further described later. It may be implemented on one or more servers, which may be local or distributed. Some aspects of the processes described below may be carried out in batches or "off line" while others preferably are carried out substantially in real time. In this description, we will sometimes use terms like "component", "subsystem", "routine", or the like, each of which preferably would be implemented in software.

In order to describe the manner in which the above-recited and other advantages and features of the disclosure can be obtained, a more particular description follows by reference to the specific embodiments thereof which are illustrated in the appended drawings. Understanding that these drawings depict only typical embodiments of the invention and are not therefore to be considered to be limiting of its scope, the invention will be described and explained with additional specificity and detail through the use of the accompanying drawings in which:

Brief Description of the Drawings

Fig. 1 is a simplified overview diagram illustrating how corporate customers (merchants) and retail customers may interact with a web platform.

Fig. 2 is a simplified flow diagram illustrating a computer-implemented method of analysis of salience of merchant campaigns to individual retail customers.

Fig. 3 is a simplified flow diagram illustrating a computer-implemented method of predicting purchase behavior utilizing machine learning.

Detailed Description of Preferred Embodiments

Advertising is one of the key business drivers for most of the companies operating on the internet, but an unexplored venue in the online banking space. This project aims at exploring the advertisement with commercial offers within online banking applications.

The degree of personalization for advertisement on the web strongly depends on the type and sophistication level of the platform. For example, in search engines such as Google, personalized advertisement is based on more than 50 factors such as location, day of the week, time of the day, accessing device, browsing history, and so on.

Advertisement on newspapers is usually personalised based on the displayed content. And, in web applications, such as Spotify, Mint or Youtube, advertisement is usually personalized based on user profiles and their specific activity within the application.

Nowadays, the advertisement model is being fully exploited on the internet. However, within online banking applications this is a venue not yet analyzed and implemented for most of the retail banks. There are many reasons for having online banking applications free of advertisement, mostly related to the fact that advertisement could damage the perception of the bank and distract customers from its main goal which is to operate efficiently with the bank. However, we believe offering properly tailored commercial recommendations should be interesting for retail customers and provide value to the bank. We use the term "interesting" not in a general or academic sense, but to mean that the customer or target of an offer or recommendation is more likely than not to be interested in acting on ("redeeming") the offer.

The key factors for recommending merchant offers in an online banking environment include:

- Commercial recommendations can be done based on transactional data that encode spending behavior in addition to the demographic attributes.
- The bank is in full control of the whole transactional loop: merchants, retail customers, and transactional data resides all in the same system.

Figure 1 is a simplified overview of an illustrative system depicting how corporate and retail customers may interact with it. The system is comprehensive being in control of all the steps from tailoring offers to the redemption transaction. In step 1, the corporate customer defines and uploads the commercial offer together with a commercial strategy and a defined audience. Step 2 is about matching the most appropriate offers for a given retail customer. In Step 3, the recipient customer accepts or redeems the offer, leading to completing a transaction such as a purchase, shown as Step 4.

One potential business model that leverages our platform may comprise one or more of three potential revenue sources:

- Annual subscription fee paid by the participant corporate customers.
- Impression fees paid by the corporate customer whose offer is displayed.
- Redemption fees paid by the corporate customer whose offer is redeemed.

A primary goal of our personalization methodology is to increase the redemption rates so that the loyalty program is proven to be efficient and useful for a bank's corporate customers proposing offers and for its retail customers benefitting from interesting offers.

<u>Challenges and Objects</u>

Collect data. The platform considers different sources of data coming from the data warehouse and the online banking channel associated with the financial institution or bank. For a production system, one of the practical challenges is to put all this data working together.

Compute metrics on large set of data. The platform computes several metrics on transactional data. Due to the size of the data to be considered, relational databases seem to be inappropriate. In a presently preferred embodiment, we incorporate a Hadoop® system to collect all the data and compute metrics that will be used by the recommendation algorithms. Apache™ Hadoop® is an open source software project that enables the distributed processing of large data sets across clusters of commodity servers. It is designed to scale up from a single server to thousands of machines, with a very high degree of fault tolerance. Rather than relying on high-end hardware, the resiliency of these clusters comes from the software's ability to detect and handle failures at the application layer.

Offline vs online computation. Commercial offers need to be given to retail customers in real time. Thus, it is necessary to carry on the most computationally expensive tasks in an offline mode, and bring the results to the online database to be used by the online application. The tradeoff between offline vs online computation has to be carefully analyzed in order to meet the basic requirements of the project.

High level objects of our invention include the following:

- Enable merchants to create offers.
- Enable merchants to specify an opportunity (interest group of retail customers) for a specific offer.
- Match offers from merchants to retail customers within a given opportunity in a personalised way.
- Consider retail customers feedback into the personalisation algorithms to increase efficiency.
- Enable merchants to monitor their published offers.
- Enable the bank to monitor the merchants' published offers.

Corporate and Retail Customers (Users)

A financial services company ("FSC"), which may be governmental or private, may offer various services for individuals as well as business customers. For example, such services may include banking (both physical locations as well as on-line), loans, payment services, stock trading or brokerage services, other investment services, etc. An FSC, which we also refer to simply as a bank, without implying any literal limitation, is likely to offer on-line services for both businesses and individuals. The businesses or corporate customers of the bank are potential users of our platform. Those businesses or merchants may sign-up for access to the platform and pay some consideration, such as an annual fee, to obtain access to the services.

Recently, merchants have different options to publish their offers on the Internet. However, online marketing becomes expensive and rather inefficient for some companies due to a lack of personalization and capability to target specific people. Through implementations of our system, merchants of all kinds and sizes will have the opportunity to target their offers to customers in a tailored way considering criteria such as proximity, loyalty, segmentation, demographics, and so on. This personalization can be done because our platform has access to transactional and demographic data about the bank's retail customers. However, our invention is not limited to any particular size of business.

A bank may have on the order of millions of retail customers, of which a large portion may be on-line banking customers. (As noted, we refer to a "bank" or "banking" in a broad general sense, extending to a wide variety of potential financial transactions.) In a presently preferred embodiment, our system is directed to managing and optimizing interactions, including proposals or offers, as between the corporate customers of an FSC and the on-line banking individual customers of an FSC.

The purpose from a corporate customer perspective is to offer discounts, for example, to retail customers in order to achieve commercial goals such as increase loyalty or frequency or gain new clients. On the other hand, the purpose from a retail customer perspective is to give them *tailored offers* based on their tastes and needs, and hence propose an interesting service.

We define an **opportunity** or an **audience** as a set of retail customers that satisfy a set of filtering criteria. In traditional marketing, opportunities are usually defined through demographic filtering criteria because it is the data that is known. However, in our system we can additionally consider financial behavior (budgets, savings goals, etc.) and transactional data to target people based on commercial interests. We have identified four commercial interests that are meaningful to create opportunities, namely Loyalty, Frequency, Location and Purchase Segmentation.

Loyalty is a very interesting commercial criterion in order to target offers. In some cases, the merchant may want to acquire new customers, in some other cases the merchant may want to reinforce loyalty of existing customers. In general, we define 4 types of loyalty for a given merchant *m* of a spending category c in a given period of time *t:* They are loyal customers, shared customers, competitors' customers, and non-customers.

Frequency is a criterion allows the system to classify retail customers into categories such as high/medium/low frequent customers related to a spending category. In this way, a merchant can target an offer to people that buy items in its category depending on their burying frequency. Note that this criterion is relative to each category and different levels can be defined.

Purchase Segmentation criterion allows the merchant to target its offers to people depending on the average amount of their transactions in that category. In other words, the merchant can target people that buy expensive or cheap items within a certain category. Note that this criterion is relative to each category and different levels can be defined.

Location is another filtering criterion to define an opportunity based on the locations given by the transactions of the retail customers. Another filtering criterion could be the location where people live, but this criterion refers to the location based on transactional data. This is very relevant since a user could live in one area but do most of the shopping in another area (for example, close to the working place). Similarly to the above criteria, this criterion may be defined with different levels (near, far away) related to a given merchant. In order to exploit this feature, we should know the location (or zip codes) of the merchants appearing in transactions, and also have a computation method to compute distances between addresses (or zip codes).

Demographic filtering criteria are classic in marketing research and do not need special computation but just filtering the data according to that criteria. We are referring to criteria such as location, gender, age, family status, profession, etc. Note that location as a demographic attribute is different from the location commercial interest. Demographic location refers to where the person lives, and location from a commercial interest point of view refers to the location where the person does shopping.

An opportunity is a predefined audience with specific commercial interests. We have identified the following opportunities for our system:

- Increase Loyalty opportunity for a specific merchant defines an audience of retail customers that are not highly loyal to that merchant. It is proposed for those merchants that want to increase the loyalty to them.
- Win New Customers opportunity for a specific merchant defines an audience of retail customers that are not regular customers of that merchant, i.e. customers that buy in the merchant category but not from that merchant. It is proposed for those merchants that want to win new customers.

- Increase Frequency opportunity for a specific merchant defines an audience of retail customers that do not purchase very frequently for that category. Please note that this opportunity may refer to customers of that merchant or customers of other merchants for that category.
- Increase Spending opportunity for a specific merchant defines an audience of retail customers that buy inexpensive products in the category. Thus, the goal of this opportunity is to propose offers of expensive products to customers that usually buy inexpensive products within that category.
- Keep Customers opportunity for a specific merchant defines an audience of retail customers that are loyal to that merchant. The goal of this opportunity is to target those loyal customers. The foregoing opportunities, among others, may be selected by the merchant when defining a campaign. They may be used as is or as a starting point to define an audience.

A campaign typically consists of the following elements, although this list is merely illustrative and not intended to be limiting:

- a merchant publishing the campaign
- an audience which defines the total target group of retail customers
- an offer (see below)
- a start date and an end date defining the period of time for which the offer is valid
- a maximum number of impressions the merchant customer is willing to afford
- a maximum cost of redemptions the merchant customer is willing to afford
- a maximum total cost of the campaign

An offer may comprise the following:

- a discount type which is either percentage or absolute number
- a discount which can be either a percentage or an absolute amount of money to be discounted. In some embodiments, discounts are not applicable to a specific item sold by the merchant but to any transaction with the merchant.
- a maximum/minimum amount transaction to apply the discount
- a title of the offer
- a descriptions of the offer (can be specified for multiple languages)
- a banner of the offer
- a link to the offer or merchant

Formal Definitions

Audiences

An audience consists of a set of filtering criteria classified in commercial interests and demographic aspects. Formally, consider U the set of users *u* which are retail customers of eFinance (|U| = 1*M*), and a set of filtering criteria as boolean functions $F = \{f : u \rightarrow \mathrm{B}\}$. Then, formally, an audience is defined as: $O = \{u: \mathrm{f}_k(u)\} \subseteq U$.

Commercial Interests. We have identified various commercial interests that are interesting to create opportunities, namely Loyalty, Frequency, Purchase Segmentation and Location.

Loyalty

Loyalty is an interesting commercial criterion in order to target campaigns. In some cases, the merchant may want to acquire new customers, in some other cases the merchant may want to reinforce loyalty of existing customers. In general, we define four types of loyalty for a given merchant *m* of a spending category *c* in a given period of time *t*. Let's first define *trx*(*u, m, t*) as the set of transactions from user *u* in merchant *m* in the period of time *t*, and *trx*(*u, c, t*) as the set of transactions from user *u* in the spending category c in the period of time *t*. For a given merchant *m*, we define its spending category as *cat*(*m*).

Loyal customers are those customers that mostly buy from merchant *m* for the category c in the given time *t*. Formally, $f_{loyalty}$ is a boolean function defined as:

[EQN 3]

$$f_{loyalty}(u,m,t) = \left(\frac{|trx(u,m,t)|}{|trx(u,cat(m),t)|} \geq k\right) \wedge (|trx(u,cat(m),t)| > 0),$$

where k is a loyalty threshold.

Shared customers are those customers that buy sometimes in m and sometimes in other merchants for the category c in the given time *t*. Formally, $f_{shared}$ is a boolean function defined as:

[EQN 4]

$$f_{shared}(u,m,t) = \left(l \leq \frac{|trx(u,m,t)|}{|trx(u,cat(m),t)|} < k\right) \wedge (|trx(u,cat(m),t)| > 0),$$

where *l* is a competitor threshold.

Competitor customers are those customers that mostly buy in other merchants than m for a the category c in the given time *t*. Formally, $f_{competitors}$ is a boolean function defined as:

[EQN 5]

$$f_{competitors}(u,m,t) = \left(0 \leq \frac{|trx(u,m,t)|}{|trx(u,cat(m),t)|} < l\right) \wedge (|trx(u,cat(m),t)| > 0)$$

Non-customers are those customers that made no purchase in category c during the period *t*. Formally, $f_{non\text{-}customers}$ is a boolean function defined as:

[EQN 6]

$$f_{non-customers}(u) = (|trx(u,cat(m),t)| = 0)$$

For example, let's consider $k = 0.6$ and $l = 0.1$, then:

- Loyal customers are the ones that make at least 60% of their transactions for cat(*m*) in *m*.
- Shared customers are the ones that make between 10% and 60% of their transactions for cat(*m*) in *m*.
- Competitors customers are the ones that make less than 10% of their transactions for cat(*m*) in *m*.

Note that loyalty criterion could also be defined in terms of amount of money spent in the merchant rather than number of transactions. However, we believe the number of transactions in a merchant gives a more accurate metrics on the loyalty concept. We define the amount associated with a transaction *t* as *amt(t)*. Then, the loyalty concept related to amounts instead of number of transactions could be implemented simply by replacing:

[EQNS 7-8]

$$|trx(u,m,t)| \text{ by } \sum_{i=0..n} amt(t_i), t_i \in trx(u,m,t)$$

and

$$|trx(u,cat(m),t)| \text{ by } \sum_{i=0..n} amt(t_i), t_i \in trx(u,cat(m),t)$$

Frequency is a commercial interest to classify people based on their buying frequency within a given category or merchant. In an embodiment, we focus only at the category level, but it could be also applied at the merchant level. We are defining this criterion in three different levels (high, medium, low), but other granularities could be exploited.

In a period of time *t* we are looking at clustering people in three clusters with respect to the number of transactions of people in a category *c*. Formally, for a given person *u,* category c and a period of time *t*, we define $x(u, c, t) = |trx(u,c,t)|$. For simplicity we will note $x(u,c,t)$ as $x(u)$ since the category and the period of time are constants. Then, we aim at partitioning people into 3 sets $S=\{S_1, S_2, S_3\}$ so as to minimize the within-cluster sum of squares.

[EQN 9]

$$\arg\min_{S} \sum_{i=1}^{3} \sum_{u_j \in S_i} \|x(u_j) - \mu_i\|^2 \text{, where } \mu_i = \overline{x(u)}, u \in S_i.$$

In a presently preferred embodiment, we use the Mahout's implementation of k-means algorithm to compute frequency clusters.

Purchase Segmentation is another commercial interest to classify people based on their mean amount on transactions for a given category or merchant. The reasoning is exactly the same as the above criterion, but replacing the number of transactions by the mean amount of all the transactions.

Thus, defining

[EQN 10]

$$x(u,c,t) \text{ as } \overline{amt(trx(u,c,t))}$$

we can use the same method as with the frequency criterion.

Targeting Campaigns to Retail Customers

The main purpose of the matching algorithm is to compute a set of good campaigns (suitable, attractive) for a given user in real time, while maximizing the success of all active campaigns. There are multiple factors to consider when evaluating the best campaigns for a given user. Some of these factors relate directly to the level of accomplishment (redemptions) of the active campaigns and their time left. Other factors relate directly to the level of interest of the user for those campaigns. The algorithm schema described below allows us to compute the set of best campaigns for a given user in real time considering a number of different factors. The weights of those different factors can be changed in order to adapt the algorithm to specific business goals. The algorithm schema is also flexible enough to incorporate additional factors beyond the ones considered in this description.

Algorithm Schema

In one embodiment, an algorithm schema may consist of four main steps. The first step computes a data structure to consider the factors related to the active campaigns themselves, independently of the current user. Thus, this first step can be computed regularly (for example once a day), and be applied for all different users logging into the system.

The second step is to compute a data structure to consider the factors related to the level of interest of the user to all active campaigns. The level of interest of the user for a campaign depends on a number of factors as described below. The third step, in an embodiment, is to combine the data structures in the previous steps into a final data structure that models the overall relevance of a campaign for the given user. Finally, the last step simply selects the *good* campaigns for the given user.

This algorithm schema enables us to fine tune different parameters or weights to arrive at factor weights that will result in an optimum algorithm. These weights may be determined by A/B testing or with more analytical processes.

Campaign Salience

This step computes the campaign salience (*OS*) for every active campaign $o_i \in O_A$. The salience of a campaign $OS(o_i)$ is computed considering the ratio of accomplishment and the time left for that campaign. An active campaign $o_i$ has the following parameters:

- *startDate*($o_i$) and *endDate*($o_i$) defining the start and end dates of the active period of the campaign $o_i$, and
- *redemptionsTarget*($o_i$) and *redemptionsActual*($o_i$) defining and target number of redemptions for $o_i$ and the total number of executed redemptions for $o_i$ up to now.

The time ratio gone for an campaign is defined as:

[EQNS 11-12]

$$TR(o_i) = \frac{today - startDate(o_i)}{endDate - startDate(o_i)}$$

$$AR(o_i) = \frac{redemptionsActual(o_i)}{redemptionsTarget(o_i)}$$

Analogously, the accomplishment ratio for an active campaign is defined as:

The salience of a campaign is then defined as $OS(o_i) = TR(o_i) - AR(o_i)$. If $TR(o_i) - AR(o_i)$ is positive, the campaign is behind its target, otherwise the campaign is ahead of its target. The idea is that those campaigns with positive OS(oi) should be pushed higher to get closer to the final target (they have higher salience "as campaigns"). The campaigns that are ahead of their target could be pushed lower with respect to the rest (they have lower salience "as campaigns").

*User-centered Campaign Salience*

This step computes a User-centered Campaign Salience $UOS(o_i, u_j)$ function, namely the salience of a campaign $o_i$ with respect to a specific user $u_j$. The *UOS* function estimates the degree to which a campaign $o_i$ might be of interest to a specific user $u_j$. In a presently preferred embodiment, we consider the following criteria to be taken into consideration for the User-centered Campaign Salience, where [0,1] is the interval of real numbers between 0 and 1.

1. Likelihood of buying in the category of the campaign. This function estimates the predicted probability "*LK*" of the user $u_j$ to buy in the category $cat(o_i)$ of the campaign $o_i$ proposed by the merchant $m(o_i)$ in the following *k* months in which the campaign will be active (noted as *k = [tau] (o*$_i$*))* henceforth). In this way, we are taking into consideration the odds of the user to be interested in buying in the category of the merchant of the given campaign.

[EQN 13]

$$LK(u_j, m(o_i), \tau(o_i)) \rightarrow [0,1]$$

Below we describe and compare a variety of methods for calculating this function.

2. Proximity of the user $u_j$ to the merchant *m* of the campaign. This function estimates the distance between two locations: (1) the location where the user lives and (2) the merchant's location. Currently, distance between locations is based on zip codes. We are also applying an exponential decay function to emphasize that longer distances should be penalized much more rapidly. We define d(uj ,m(oi)) as the distance in Km from the zip code of the user $u_j$ to the zip code of the merchant $m(o_i)$ offering $o_j$.

[EQN 14]

$$PX(u_j, m(o_i)) = e^{-d(u_j, m(o_i))/\kappa} \rightarrow [0,1]$$

where k is the decay parameter.

3. Activity of the user $u_j$ *with* the merchant m$(o_i)$ that is conducting the campaign $o_i$. The ACT function [EQN 15] estimates the relevance of the activity of user uj to the merchant m(oi) as a whole. In other words, ACT expresses how much business the given user is conducting with the merchant compared to the rest of the merchant's customers. In one embodiment, the ACT is defined as a linear combination of two ratios: one based on the number of transactions and the other based on the spending amount. The two ratios are: a) the ratio of the number of transactions (*trx*) by the user compared to the number of transactions by the user that has more transactions in that merchant ($v_T$), and b) the ratio of the total amount of money spent (*amt*) by the user compared to the total money spent by the user that has spent more with that merchant ($v_M$).

[EQN 15]

$$ACT(u_j, m(o_i)) = \left(\alpha_1 \frac{|trx(u_j, m(o_i))|}{|trx(v_T, m(o_i))|} + (1-\alpha_1)\frac{amt(u_j, m(o_i))}{amt(v_M, m(o_i))}\right) \rightarrow [0,1]$$

4. Loyalty of the user to the merchant of the campaign. The LY function estimates the loyalty level of the user $u_j$ to the merchant m = m(o) for a given category c = cat($o_i$). Basically, *LY* defines the ratio of activity of the user with the merchant compared with the users activity in the category c. LY combines two aspects of loyalty, one related to the number of transactions, and the other one related to the amount money spent:

[EQN 16]

$$LY(u_j, m(o_i)) = \left(\alpha_2 \frac{|trx(u_j, m(o_i))|}{|trx(u_j, cat(o_i))|} + (1-\alpha_2)\frac{amt(u_j, m(o_i))}{amt(u_j, cat(o_i))}\right) \rightarrow [0,1]$$

5. Merchant Fitness with respect to a user *uj* considering the median of the merchant's selling prices. This function estimates how close is (1) the median of the user uj transaction amounts in the given category $cat(o_i)$ to (2) the median of the merchant m transaction amounts:

[EQN 17]

$$MF(u_j, m(o_i)) = \left(1 - \frac{|\mathrm{M}(u_j, cat(o_i)) - \mathrm{M}(m(o_i))|}{max(\mathrm{M}(u_j, cat(o_i)), \mathrm{M}(m(o_i)))}\right) \rightarrow [0,1]$$

where M is the median.

Thus, the User-centered Campaign Salience (UOS) of a campaign $o_i$ for a given user $u_j$ is a linear combination of the above factors:

[EQN 18]

$$UOS(u_j, o_i) = \omega_1 LK(u_j, o_i, \tau(o_i)) + \omega_2 PX(u_j, m(o_i) + \omega_3 ACT(u_j, m(o_i)) + \omega_4 LY(u_j, m(o_i))) + \omega_5 MF(u_j, m(o_i))$$

where $\omega_1 + \omega_2 + \omega_3 + \omega_4 + \omega_5 = 1.$

*Overall Salience*

This third step determines the overall salience of a campaign $o_i$ to a user $u_j$ by combining the User-centered Campaign Salience (UOS) with the Campaign Salience (OS):

combining the User-centered Campaign Salience (UOS) with the Ca

[EQN 19]

Figure 2 is a simplified flow diagram that summarizes the process detailed above. In the figure, a process for targeting a campaign to an appropriate retail customers may comprise accessing a set of campaign data or "designs" or parameters, block **202**. Next, computing a campaign salience function (OS) as discussed above, block **204**, for each campaign that is currently active, assessing its relative success at the current time, along with other factors. At block **206**, the system may apply the campaign salience to a set of users. In this regard, we would quantitatively assess various factors for each user including (1) Likelihood of buying in the category of the campaign, block **208**; (2) Proximity of the user to the merchant that is conducting the campaign, block **210**; (3) Relative activity of the user with the merchant that is conducting the campaign, block **212**; (4) Loyalty of the user to the merchant conducting the campaign, block **214**; (5) Merchant Fitness with respect to a user by comparing the merchant's selling prices to the user's median transaction amount in the category, block **216**. Finally, in a preferred embodiment, we calculate a linear combination of the foregoing factors (1)-(5), see block **218** and EQN 18. At this juncture, we have a UOS or user-centered campaign salience for every live campaign and every current user. Subsets of this data may be partitioned as well for various reasons. The specific weights may be "tuned" over time using various techniques, for example, A/B testing. Then, the system may determine overall salience as noted above with regard to EQN 19, block 220 in the figure.

*Selecting Campaigns*

The final step requires selecting *k* campaigns for a given user *u.* The salience of a campaign $o_i$ for a user $u_j$ determines the probability of that campaign offer to be accepted by the user. Instead of just taking the *k* campaigns with higher salience for a user, we propose to use inverse transform sampling in our preferred embodiment. (ITS, is also known as inversion sampling or Smirnov transform). ITS performs weighted randomized selection; that is to say, ITS selects one of the campaigns probabilistically, assuring that the higher the salience, the higher the probability of being selected. This procedure insures variety for the user since, no matter how often she logs in the system, the campaigns selected will not be deterministically repeated (which would be the case when nothing changes the factors and the selection just takes the k campaigns with highest salience). Selecting *k* campaigns can be achieved simply by repeating k times the ITS procedure.

*Alternative Embodiments*

Above we defined the User-centered Campaign Salience (***UOS***) considering a function (*LK*) that estimates the predicted probability that the user $u_j$ will buy in the category $cat(o_i)$ of the campaign $o_i$ proposed by the merchant $m(o_i)$ in the following *k* months in which the campaign will be active (noted as *k* = *Tau(oi)* henceforth). In this section, we describe an alternative approach to compute this function.

We aim to predict the odds of a retail customer making a purchase in a given category in the months following the current time. We distinguish three different types of data that can be relevant for such prediction:

1. Past transactional data of the user $u_j$. Past transactional data for a user should indicate the generic interest of a user in a specific category $cat(o_i)$ in the future, therefore also a degree of interest in a campaign within a category.

2. Past behavior of $u_j$ regarding other campaigns. Past behaviour of a user in other campaigns should also indicate something about the degree of interest of a user in accepting a campaign within a specific category or from a specific merchant.

3. Demographic data from the user $u_j$. Some demographic attributes could have an impact on the likelihood of a user to accept a campaign within a specific category or from a specific merchant.

Machine Learning techniques can be applied to learn a model that predicts the likelihood of a user to purchase in a category. Supervised Learning is a family of Machine Learning algorithms that could be applied to solve this problem. Supervised learning is the machine learning task of inferring a function from labeled training data. The training data consist of a set of training examples. In supervised learning, each example is a pair consisting of an input object (typically a vector) and a desired output value (also called the supervisory signal). A supervised learning algorithm analyses the training data and produces an inferred function, which is called a classifier (if the output is discrete) or a regression function (if the output is continuous). The inferred function should predict the correct output value for any valid input object. This requires the learning algorithm to generalize from the training data to new situations in a "reasonable" way.

In an example, we define the output value to be learnt as the likelihood of a user to buy in a certain category in the month m. The vector of input features may be the set of transactions (or derived data) in the previous months with merchant m and demographic attributes. For example, if we consider one year of transactional data, we define the problem as finding a likelihood of a user to buy in the 12th month considering behavioral data from the first month to the 11th month and demographic attributes.

In general, the problem here is to compute the Likelihood of buying in the category of a campaign. This function estimates the predicted probability of the user $u_j$ to buy in the category $cat(_{Oi})$ of the campaign $o_i$ proposed by the merchant $m(o_i)$ in the following *k* months in which the campaign will be active (noted *as k* = $Tau(o_i)$ henceforth).

[EQN 20]

$$LK(u_j, m(o_i), \tau(o_i)) \to [0, 1]$$

We evaluated several different algorithms to solve this problem, using one year of actual prior purchase history ($k = 1$) and for different categories: shoes, tourism, sports, cosmetics, and restaurants. The historic data that is considered for each instance of the training set contains the transactional data for the last 12 months prior to the month to be predicted. We evaluated and compared the effectiveness of several different algorithms, for example, linear regression and decision tree learning. We concluded that one preferred embodiment would implement a Random Forest technique. In this technique, Random Forest algorithms build a multitude of decision trees with different variable orderings in order to vote for the best predictive outcome among all the constructed trees. Software libraries such as Apache Mahout are commercially available to implement these techniques.

Figure 3 in the drawing is a simplified flow diagram of a process 300 for predicting the likelihood (LK) of a user making a purchase in the category $cat(o_i)$ of the campaign $o_i$ proposed by the merchant $m(o_i)$ in the next k months in which the campaign will be active. In this example, the prediction is based on prior purchase data in the category. To begin, the process accesses customer (user) historic purchase data, block 302. Technical details of the data storage and processing systems in a preferred embodiment are shown in the Appendix, which forms a part of this specification. Purchase data is selected or filtered for a given purchase category, namely the category of the offer under consideration, block 304. Further, a subset of that data may selected for a given time period, for example the past year, to form a machine learning training set, block 306. In some embodiments, the training data set may also include demographic data of the user, block 308. The training data set may also include purchase data of the user in other campaigns, block 307. Various combinations of these datasets may be used.

Next, a selected machine learning process is applied to the training data set to form a model of the data, block 310. For example, the ML process may comprise Random Forest or other known techniques. The resulting predictive model is then run to predict the most likely users to accept (redeem) the offer in a subsequent time period, block 312. These results may be stored in the database, and communicated to the corresponding merchant and target users, block 314.

We designed a software architecture for practical implementation of a system and methods disclosed herein. This is merely an example, and other architectures, software tools, etc could be used. The overall picture of the project workflow is depicted in Figure 5 in the drawing. A detailed description of the diagram is given in the Appendix.

It will be obvious to those having skill in the art that many changes may be made to the details of the above-described embodiments without departing from the underlying principles of the invention. The scope of the present invention should, therefore, be determined only by the following claims.

## Appendix



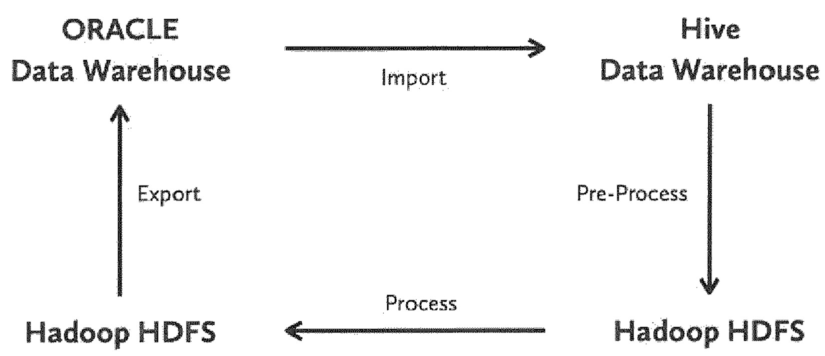


Figure 2: This figure illustrates the four main processes in Bicicletta from a data workflow point of view.

### 6.1 Technology Stack

The principal technologies used in the project are:

**Oracle** which acts as both the source (Data Warehouse) and the ultimate destination (Online Bicicletta database) of the data used for the project.

**Hadoop**[29] for large-scale data processing and analysis. Specifically, for this project we used *Cloudera CDH4*[30](Enterprise Free Edition) of Hadoop.

**Scoop**[31] is the technology being used for the import and export processes that move data between Oracle and Hadoop.

**Hive**[32] is a data warehouse system for Hadoop that is compatible with the SQL query language and where Sqoop extracts and deposits data within Hadoop.

### 6.2 Data Workflow

As shown in the process overview (Figure 2), the Bicicletta workflow consists of four steps to compute all the data needed by the online algorithm described in Section 4.

1. **Import**. Bicicletta needs transactional data from retail and corporate customers to compute the metrics to be used by the online algorithm (Section 4). Thus, this step imports transactional data from the the Postfinance data warehouse into the Hadoop environment with Sqoop.

2. **Pre-Process**. In the Hadoop environment there are a set of processes to prepare the data for the algorithms that compute the metrics needed by the online algorithm. In this step, the imported tables are joined to create one single row per retail customer.

[30]Visit Cloudera website at `http://www.cloudera.com/`.

*Confidential and Proprietary*
Copyright 2003-2013, Strands, Inc info@strands.com
spf.strands.com

3. **Process**. In this step, the machine learning algorithms are applied to the output of the previous step. First, the k-means clustering algorithms[33] are applied to discover clusters for the commercial interests (see Section 2.2.1): loyalty, frequency, and purchase segmentation. After running those algorithms, we use the random forest[34] ensemble learning method to compute the likelihood of each user to purchase in a given industry. This step includes both building the learning model and then applying it to all users in parallel using Mahout[35]

4. **Export**. The results from the algorithms are then loaded into an Oracle database by Sqoop so they can be used by the online application. After this process, the database contains the data regarding loyalty, frequency, purchase segmentation, and likelihood of purchasing for each retail customer for each industry.

## 6.3 Software Components

The main software components involved in Bicicletta are depicted in Figure 3. Starting from the bottom left, Merchant Campaign Management is a web application allowing corporate customers to create and monitor campaigns and to analyse the market. This interaction is done through the Bicicletta API described in Section 10. Bicicletta also interacts with retail customers through the User Offer Interaction component, part of the online banking application, also through the Bicicletta API.

The blue boxes atop the diagram show the unsupervised and supervised learning (UL and SL) models for clustering and classification, respectively. The clustering component is used to compute for each industry what should be considered low, medium and high segments for each of loyalty, recurrence and median spending. The result of this clustering is stored in the orange boxes representing tables in the online Bicicletta database. The classification component takes care of determining for each retail customer and for each industry the likelihood of the customer making a purchase in the next month. This information is also kept in the online Bicicletta database as represented by the Customer Category Analysis box. Both of these components are central to the Hadoop system described in detail in Section 6.4.

## 6.4 Hadoop System

The processing within the Hadoop system begins and ends with importing and exporting data as explained previously. At its heart, however, are the four main steps listed here, depicted in Figure 4, and described below.

- Preprocessing
- Building the predictive model
- Running the predictive model
- Data analysis

[33]Learn more about k-means clustering at `http://en.wikipedia.org/wiki/K-means_clustering`.
[34]Learn more about random forests at `http://en.wikipedia.org/wiki/Random_forest`.
[35]Visit Mahout website at `http://mahout.apache.org/`.

*Confidential and Proprietary*
Copyright 2003-2013, Strands, Inc
info@strands.com
spf.strands.com

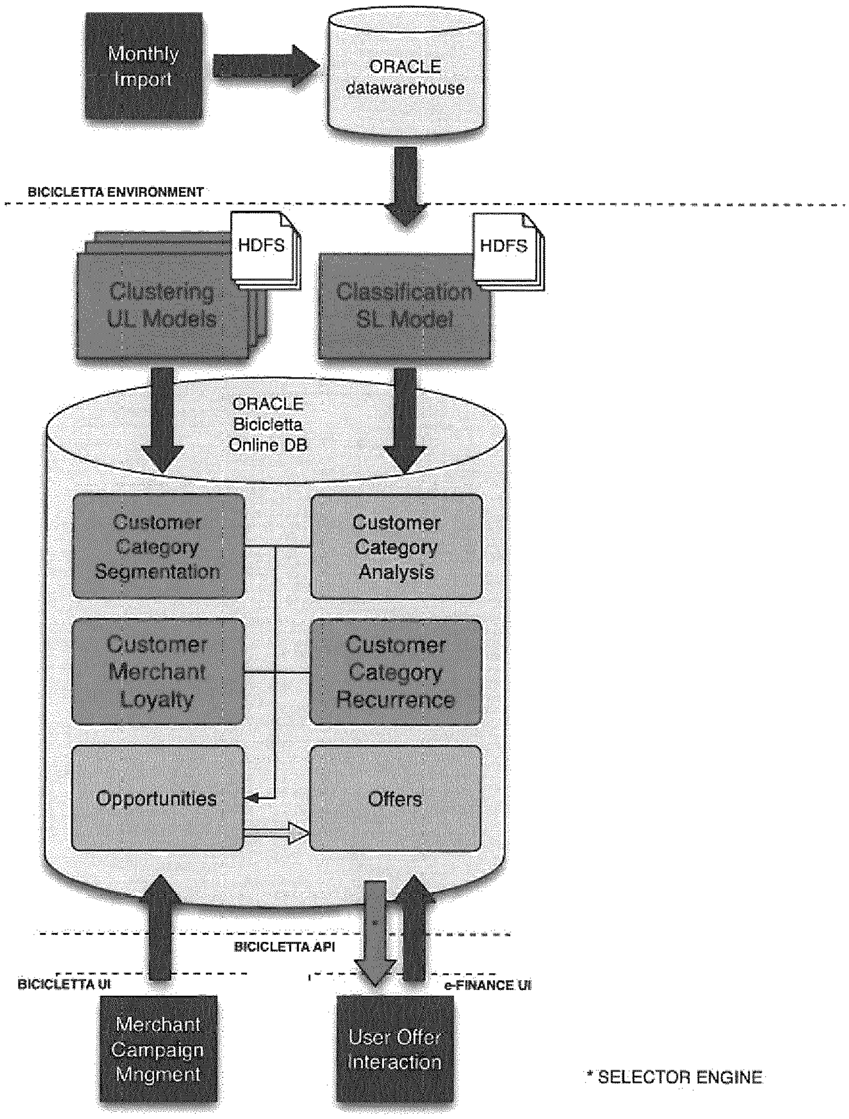


Figure 3: This figure illustrates the architecture for Bicicletta and how its components interact. Blue boxes are the software components within the Hadoop system to compute the metrics for the Oracle Bicicletta Online DB using Machine Learning algorithms.

*Confidential and Proprietary*
Copyright 2003-2013, Strands, Inc

info@strands.com
spf.strands.com

#### 6.4.1 Preprocessing

The preprocessing step takes the raw data imported by Sqoop and with Hive selects and joins the information together to form tables used internally by the algorithms. The raw data includes the USER_CONNECTIONS and SAVING_ACCOUNTS tables from e-Cockpit, the SAVING_ACCOUNT_OPERATIONS_BIC table, which is a pre-joined table using data from both e-Cockpit and the data warehouse, and finally M_01_KUNDE and M_01_PERSON from the data warehouse.

#### 6.4.2 Building the predictive model

The second step uses the data prepared by the preprocessing to build a predictive model for determining the likelihood that a given user will make a purchase in some industry in the coming month. First the data is sampled and divided into test and training sets. The training set is used to build the random forest model with Mahout, which can then be evaluated against the test set for documenting its performance. The model itself is a function that takes a set of information about a user and outputs the likelihood.

#### 6.4.3 Running the predictive model

Once we have built the model we can make the predictions for all retail customers in the system. Again Mahout is used to apply the learned model.

#### 6.4.4 Data Analysis

The data analysis step computes all the additional information to store in the database needed by the online Bicicletta web application. This includes the clustering values described previously, the features used by the salience algorithm such as median spending amounts by customers and median spending amounts at merchants, loyalty values, recurrence statistics, etc.

*Confidential and Proprietary*
Copyright 2003-2013, Strands, Inc
info@strands.com
spf.strands.com

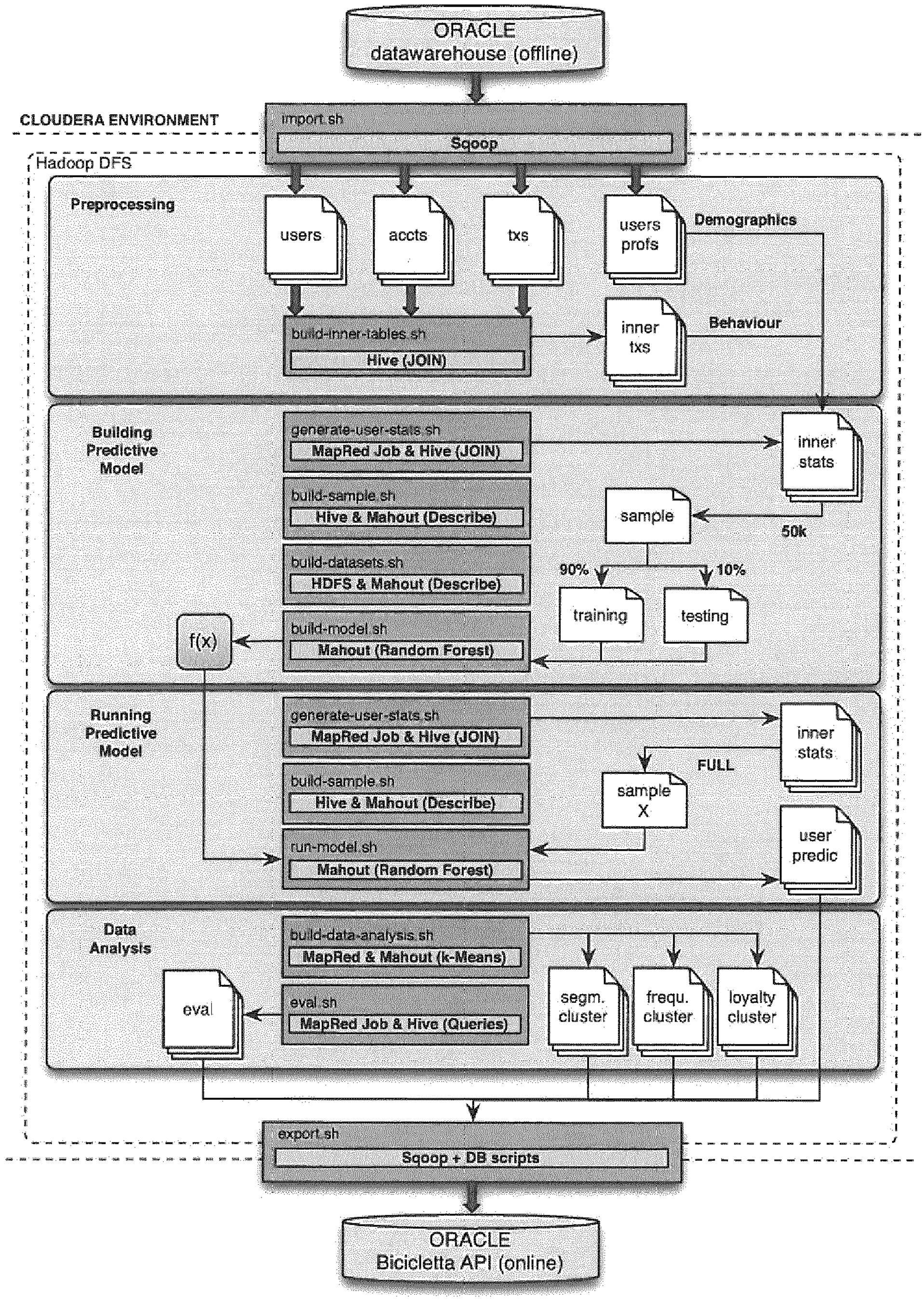


Figure 4: This figure describes the Hadoop system for Bicicletta.

*Confidential and Proprietary*
Copyright 2003-2013, Strands, Inc

info@strands.com
spf.strands.com

# 7 Conclusions

In this project, we have proposed and analysed a set of metrics and a main algorithm to be able to build a system that matches commercial offers proposed by merchants to retail customers. This matching algorithm includes factors such as the level of accomplishment of each of the active offers, commercial interests defined in the offers, and behavioural and demographic data from retail customers (see Section 4). The proposed algorithm is based on a linear combination of different factors which can be weighted as appropriate. One of those factors is computed through a machine learning algorithm (random forest) that predicts the likelihood of a retail customer to buy in a certain category in the following months (see Section 5).

The system is implemented in a Hadoop platform to be able to process large amounts of data and use machine learning algorithms with Map-Reduce processes (see Section 6).

The system has been deployed and fully tested at Postfinance servers proving that all the processes with real data workflows are working in a real production type of environment. The performance of the system has been proven to be adequate for all the offline processes.

## 7.1 Algorithm evaluation for selected industries

We have compared the baseline algorithm with the random forest algorithm (see Section 5.8) to predict the likelihood of buying in a given industry for several selected industries: *gastronomy*, *shoes*, *sports*, *cosmetics*, and *tourism*. The results are shown in Table 3 proving that the random forest algorithm works significantly better than the baseline.

| | Shoes | Gastronomy | Sports | Cosmetics | Tourism |
|---|---|---|---|---|---|
| Baseline | 0.3616 | 0.4000 | 0.3611 | 0.3166 | 0.4316 |
| Random Forest | **0.3524** | **0.3888** | **0.3521** | **0.3054** | **0.3993** |

Table 3: RMSE results for several selected industries comparing random forest algorithm with the baseline algorithm. We can observer that the random forest algorithm performs better than the baseline in all the selected industries.

*Confidential and Proprietary* info@strands.com
Copyright 2003-2013, Strands, Inc spf.strands.com

**Claims**

**1.** A computer-implemented method comprising, in an on-line banking environment:

accessing stored campaign data comprising a set of currently active campaigns, wherein each campaign data comprises an offer of a corresponding financial transaction, by a given merchant, in a given spending category, to enable redemption by a customer;
computing, for each active campaign in the campaign data, a corresponding campaign salience metric based on comparing a time elapsed factor to an accomplishment factor, to enable increased emphasis on those campaigns that are lagging behind their target redemptions;
determining, for each active campaign, a corresponding user-centered campaign salience (UOS) metric with respect to each specific customer to estimate a level of interest each user is likely to have in each active campaign;
combining the campaign salience metrics with the user-centered campaign salience metrics thereby modeling an overall salience metric of each campaign for each customer; and
selecting at least one of the campaigns to direct to a given customer, based on the overall salience metrics for that user.

**2.** The method of claim 1 including periodically updating the computation of campaign salience metrics to generate current data responsive to the passage of time and additional redemptions since the last computation.

**3.** The method of claim 1 or 2 wherein:

the stored campaign data includes, for each active campaign, a start date, an end date, a target number of redemptions, and an actual number of redemptions up to the present time;
the time elapsed factor is determined based on a time ratio calculated as

$$TR(o_i) = (today - startDate\ (o_i)) / (endDate - startDate(o_i));$$

and
the accomplishment factor is determined based on an accomplishment ratio calculated as

$$AR(o_i) = redemptionsActual\ (o_i) / redemptionsTarget(o_i).$$

**4.** The method of claim 3 wherein:

the overall salience metric $OS(o_i)$ of each campaign is determined as $TR(o_i)$ - $AR(o_j)$ to provide an indication such that, in the case that $TR(o_i)$ - $AR(o_i)$ is positive, the campaign is lagging behind its target.

**5.** The method of any preceding claim wherein the user-centered campaign salience metric is based on a combination of multiple factors including an estimated likelihood of a given customer buying in the category of the campaign, and geographic proximity of the customer to the merchant of the campaign.

**6.** A computer-implemented method comprising, in an on-line banking environment:

accessing stored campaign data comprising a set of currently active campaigns,
wherein each campaign data comprises an offer of a corresponding financial transaction, by a given merchant, in a given spending category, to enable redemption by a customer;
computing, for each active campaign in the campaign data, a corresponding **campaign salience** metric based on comparing a time elapsed factor to an accomplishment factor, to enable increased emphasis on those campaigns that are lagging behind their target redemptions;
computing, for each active campaign, a corresponding **user-centered campaign salience** (UOS) metric with respect to each specific customer to estimate a level of interest each user is likely to have in each active campaign; and
combining the campaign salience metrics with the user-centered campaign salience metrics thereby modeling an overall salience metric of each campaign for each user;
wherein the *user-centered campaign salience* metric is based on a **linear combination** of at least two factors selected from a set of factors that includes (a) an estimated **likelihood** metric of a given user buying in the category of the campaign, (b) a geographic **proximity** metric of the user relative to the merchant of the campaign, (c) an activity metric of the user with the merchant, (d) a **loyalty metric** of the user relative to the merchant for the given category, and (e) a **fitness metric** of the merchant relative to the user.

**7.** The method of claim 6 including computing the geographic proximity metric as an estimated distance between a location of the user's residence and a location of the merchant, including applying an exponential decay function in computing the geographic proximity metric so as to penalize longer distances relatively rapidly.

**8.** The method of any preceding claim wherein the activity metric is based on a linear combination of a transactions factor and a spending amount factor.

**9.** The method of claim 8 wherein:

the transactions factor comprises a ratio of a number of transactions (trx) by the user compared to a number of transactions by a user that has more transactions with that merchant ($v_T$); and
the spending amount factor comprises a ratio of a total amount of money spent (amt) by the user compared to the total money spent by the user that has spent more money with that merchant ($v_M$).

**10.** The method of any of claims 6 to 9 including computing the loyalty metric as a ratio of activity of the user with the merchant compared to the user's overall activity in the category.

**11.** The method of any of claims 6 to 10 including computing the fitness metric by comparing a median of the user's transaction amounts in the category to a median of the merchant's transaction amounts.

**12.** A computer-implemented method for predicting purchase behavior, comprising,
accessing a datastore of financial data of a financial institution for a given user $u_j$ who is a customer of the institution;
extracting transactional data of the user $u_j$ from the stored data;
processing the transactional data to estimate the user's level of interest in a spending category $cat(o_i)$ of an active campaign;
processing the transactional data to estimate the user's level of interest regarding previous campaigns that are no longer active; and
applying a machine learning technique based the transactional data to estimate the user's level of interest in the active campaign.

**13.** The method of claim 12 wherein the machine learning technique comprises applying a random forest algorithm.

**14.** The method of claim 12 or 13 including repeating the method for plural users to estimate each of the plural users' respective levels of interest in the active campaign.

**15.** The method of claim 14 including selecting at least one user based on the estimated levels of interest and communicating the active campaign offer to the selected user.

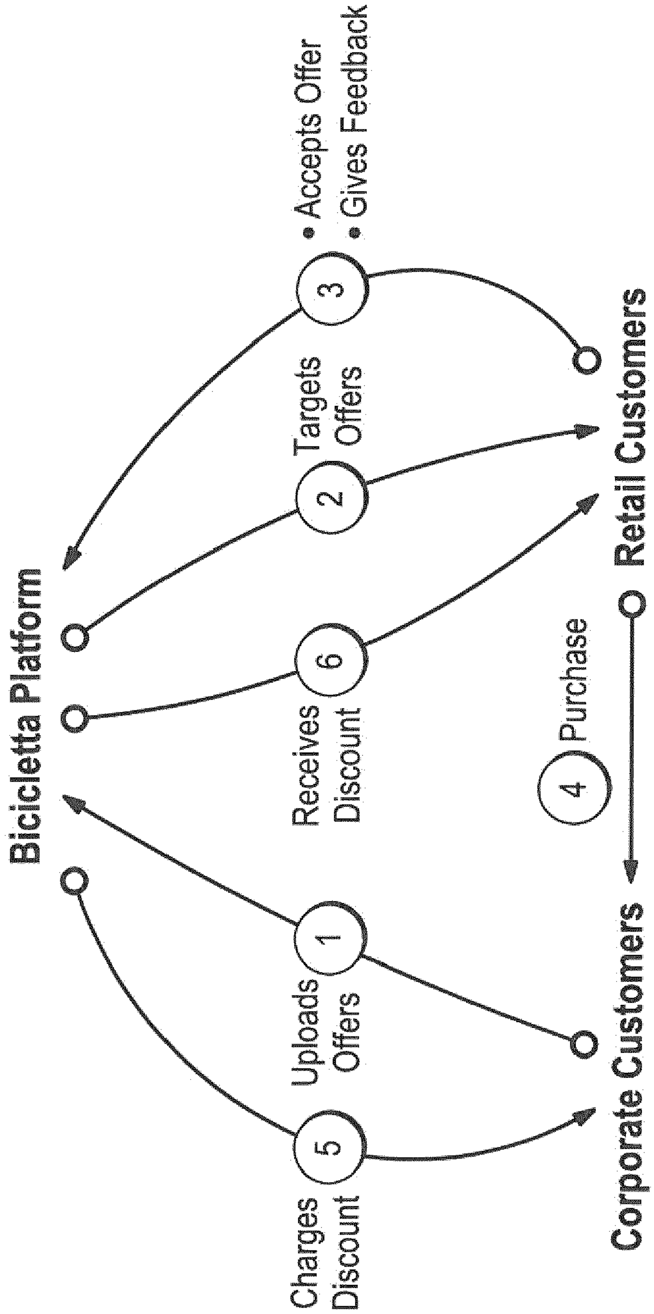
Bicicletta Platform
Charges Discount
5
Uploads Offers
1
Receives Discount
6
Targets Offers
2
3
• Accepts Offer
• Gives Feedback
4
Purchase
Corporate Customers
Retail Customers

FIG. 1

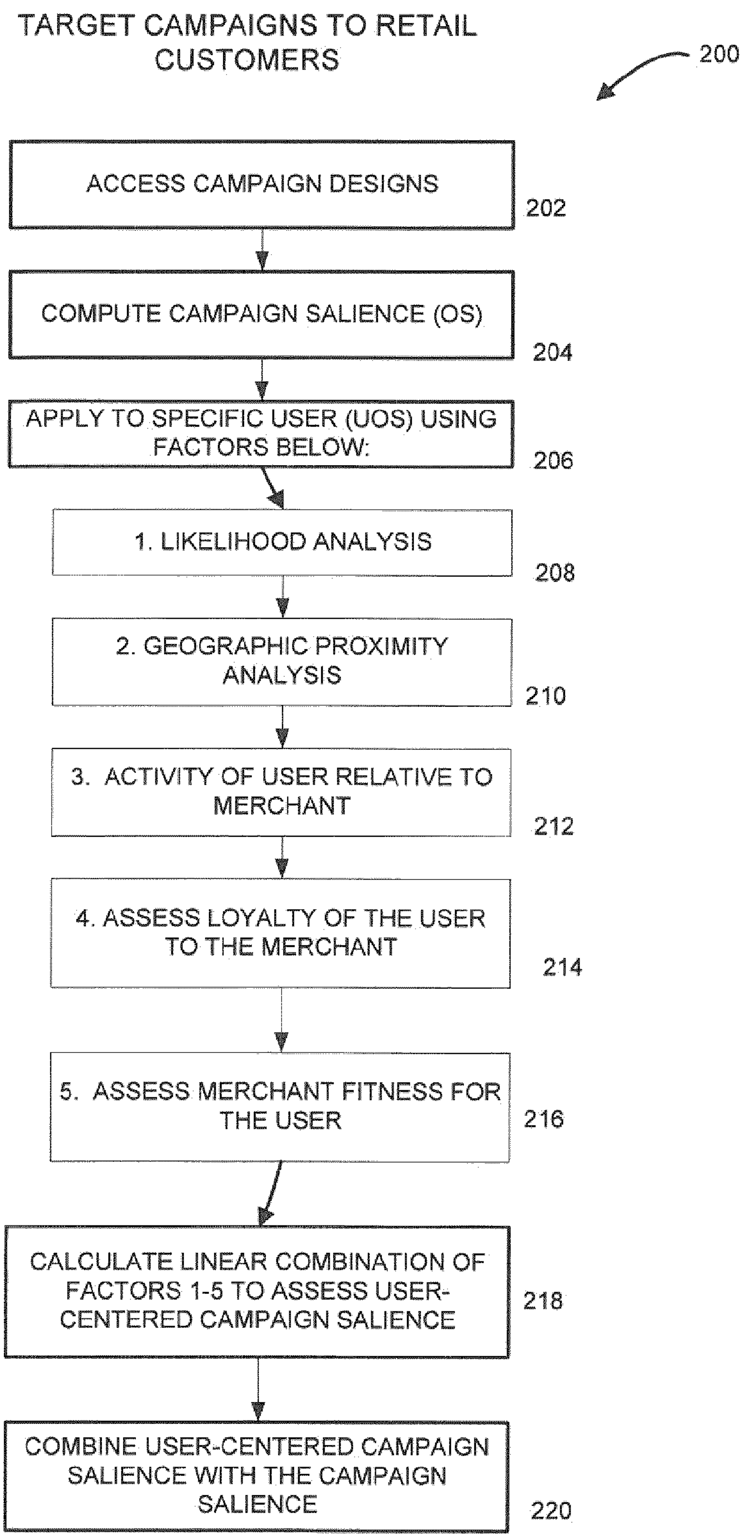
TARGET CAMPAIGNS TO RETAIL CUSTOMERS
200
ACCESS CAMPAIGN DESIGNS
202
COMPUTE CAMPAIGN SALIENCE (OS)
204
APPLY TO SPECIFIC USER (UOS) USING FACTORS BELOW:
206
1. LIKELIHOOD ANALYSIS
208
2. GEOGRAPHIC PROXIMITY ANALYSIS
210
3. ACTIVITY OF USER RELATIVE TO MERCHANT
212
4. ASSESS LOYALTY OF THE USER TO THE MERCHANT
214
5. ASSESS MERCHANT FITNESS FOR THE USER
216
CALCULATE LINEAR COMBINATION OF FACTORS 1-5 TO ASSESS USER-CENTERED CAMPAIGN SALIENCE
218
COMBINE USER-CENTERED CAMPAIGN SALIENCE WITH THE CAMPAIGN SALIENCE
220

FIG. 2

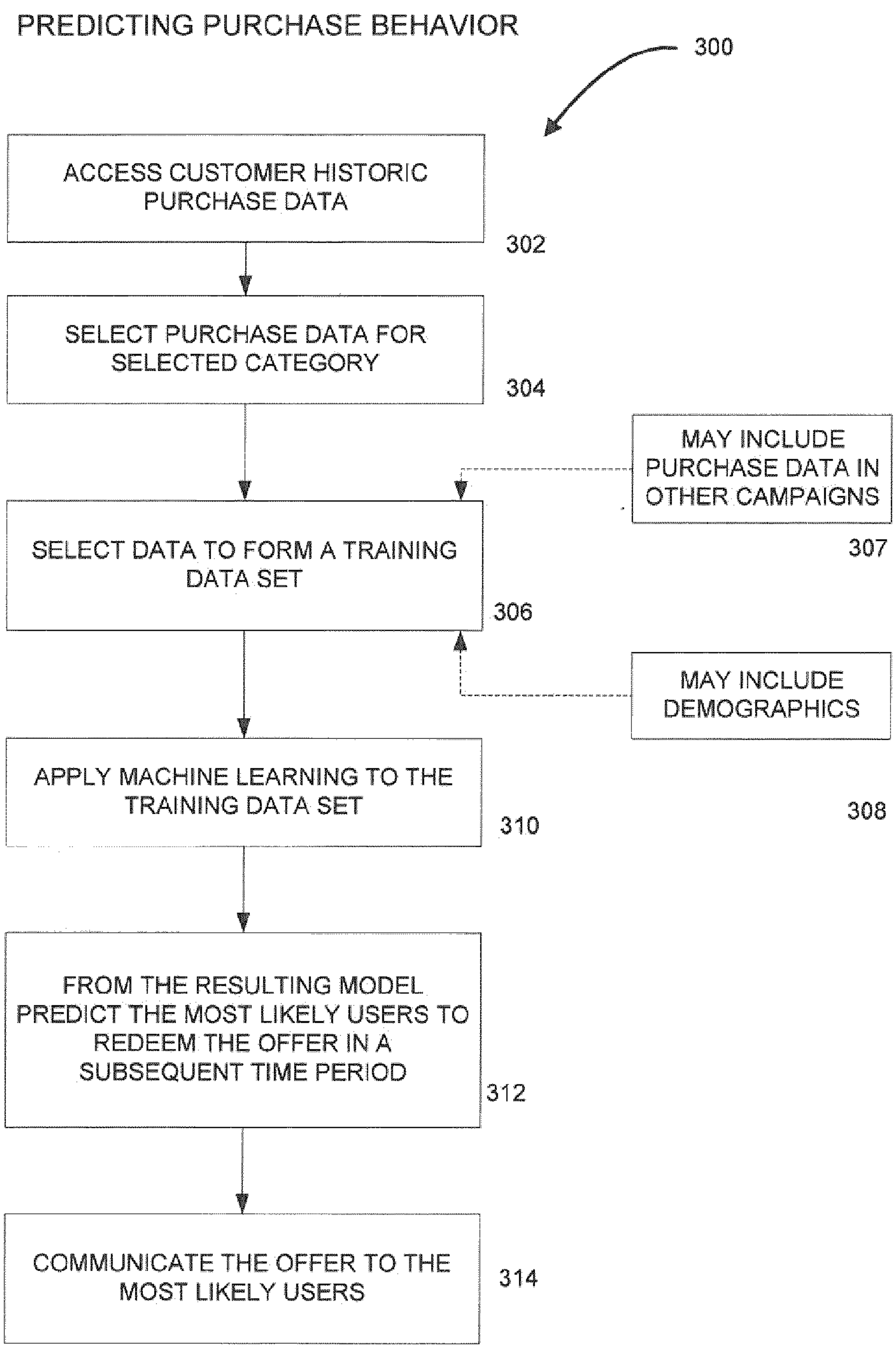
PREDICTING PURCHASE BEHAVIOR
300
ACCESS CUSTOMER HISTORIC PURCHASE DATA
302
SELECT PURCHASE DATA FOR SELECTED CATEGORY
304
MAY INCLUDE PURCHASE DATA IN OTHER CAMPAIGNS
307
SELECT DATA TO FORM A TRAINING DATA SET
306
MAY INCLUDE DEMOGRAPHICS
308
APPLY MACHINE LEARNING TO THE TRAINING DATA SET
310
FROM THE RESULTING MODEL PREDICT THE MOST LIKELY USERS TO REDEEM THE OFFER IN A SUBSEQUENT TIME PERIOD
312
COMMUNICATE THE OFFER TO THE MOST LIKELY USERS
314

FIG. 3

Europäisches Patentamt
European Patent Office
Office européen des brevets

# EUROPEAN SEARCH REPORT

Application Number
EP 14 17 1999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| L | EPO: "Mitteilung des Europäischen Patentamts vom 1. Oktober 2007 über Geschäftsmethoden = Notice from the European Patent Office dated 1 October 2007 concerning business methods = Communiqué de l'Office européen des brevets,en date du 1er octobre 2007, concernant les méthodes dans le domaine des activités",<br>JOURNAL OFFICIEL DE L'OFFICE EUROPEEN DES BREVETS.OFFICIAL JOURNAL OF THE EUROPEAN PATENT OFFICE.AMTSBLATTT DES EUROPAEISCHEN PATENTAMTS, OEB, MUNCHEN, DE,<br>vol. 30, no. 11,<br>1 November 2007 (2007-11-01), pages 592-593, XP007905525,<br>ISSN: 0170-9291<br>* Statement in accordance with the Notice from the European Patent Office dated 1 October 2007 concerning business methods(OJ 11/2007; p592-593)<br>The claimed subject matter, with due regard to the description and drawings, relates to processes comprised in the list of subject matter and activities excluded from patentability under Art.52(2) and (3) EPC. The applicant is advised that in accordance with the established practice of the EPO, no search need be performed in respect of those aspects of the claimed invention.<br>The only identifiable technical aspects of the claimed invention relate to the use of conventional, general-purpose data processing technology for processing data of an inherently non-technical nature. The information technology employed is considered to have been generally known as it was widely available to everyone at the date of filing/priority of the present | 1-15 | INV.<br>G06Q30/02<br><br>TECHNICAL FIELDS SEARCHED (IPC)<br>G06Q |

The present search report has been drawn up for all claims

1

| Place of search | Date of completion of the search | Examiner |
|---|---|---|
| The Hague | 1 September 2014 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 14 17 1999

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | application. The notoriety of such prior art cannot reasonably be contested. No documentary evidence was therefore considered required. * ----- | | |

TECHNICAL FIELDS SEARCHED (IPC)

The present search report has been drawn up for all claims

1

| Place of search | Date of completion of the search | Examiner |
|---|---|---|
| The Hague | 1 September 2014 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 61833830 A